# EUROPEAN PATENT SPECIFICATION

(11) **EP 3 707 094 B1**
(45) Date of publication and mention of the grant of the patent: **06.10.2021**
(21) Application number: 18826118.4
(22) Date of filing: 05.11.2018
(51) Int. Cl.: B66D 5/10, F16D 49/12

(54) **FORESTRY WINCH BELT BRAKE WITH REGULATING MECHANISM**
WINDENGURTBREMSE FÜR FORSTWIRTSCHAFT MIT REGULIERUNGSMECHANISMUS
FREIN À COURROIE DE TREUIL FORESTIER DOTÉ D'UN MÉCANISME DE RÉGULATION

(30) Priority: 09.11.2017 SI 201700298
(43) Date of publication of application: 16.09.2020
(73) Proprietor: Tajfun Planina Proizvodnja Strojev, D.o.o., 3225 Planina Pri Sevnici (SI)
(72) Inventor: KOZINC, David, 3270 Laske (SI); GOBEC, Damjan, 2000 Maribor (SI)
(74) Representative: Borstar, Dusan
(86) International application number: PCT/SI2018/000022
(87) International publication number: WO 2019/093972

(56) References cited:
- DE-C- 843 196
- SI-A- 22 837
- US-A- 2 151 892

## Description

The invention refers to a belt brake with regulating mechanism, which is generally suitable for being used in a forestry winch, which is powered by hydraulic driving means via a cardan shaft of a tractor, to which such winch is coupled. Consequently, such invention in the field of working operations and transporting belongs to driving units for hoisting devices, in particular to the field of forestry winches, and still more exactly to accessories for accelerating or decelerating, which are used by manipulating with each disposable load. According to the International Patent Classification such inventions belong to the class B 66 D 5/00.

The invention is based on a problem, how to create a brake, which could be arranged on a circumferential surface of a winging drum in a forestry winch, and by means of which said winch could be decelerated in various pre-determined operating regimes, namely either in a regime of prompt and stressful braking, or also in a regime of slowly and smoothly braking by a pre-determined intensity, which would then enable safer and easier manipulation with the forestry winch in particularly by towing timbers along essentially inclined terrain.

A belt brake as such consists of a brake disc with a smooth circumferential surface, around which a braking belt is placed. Each braking torque is generated by pressing said belt towards said circumferential surface, and merely depends on each tensioning force, friction coefficient as well as on extent of the area, in which said band is engages said circumferential surface. Each brake efficiency by rotating said disc in one or another direction depends on arrangement of points, in which both terminal portions of the belt are attached, as well as on each braking mechanism, by which said band is tensioned and are either connected with a brake assembly, or are a part of said assembly.

Belt brakes are disclosed e.g. in AT-98564, DE-OS 2 309 740 or DE-OS 1 531 297, while the most pertinent one is disclosed in SI 22837 A, which discloses the preamble of claim 1.

The main feature of sais brake according to SI 22837 A is that adjusting each tension of the braking belt by rotating the brake disc in its first direction allows efficient braking, which is required for achieving such torque, which is sufficient to stop each load quickly and efficiently, while upon releasing said belt and rotating the brake disc in opposite direction the brake is activated in another regime, namely to generate essentially smaller and precisely adjusted torque, which is required for retaining the cable by winding onto the winding drum, by which the pressure between the belt and the surface of the disc shall be uniformly distributed along the complete active length of the belt. Such belt brake consists of a rotatable brake disc, which may represent a part of the circumferential surface of the winding drum, as well as of a braking belt, which is placed around said smooth circumferential surface of said brake disc and can be tensioned o released by means of a brake mechanism, to which both terminal portions of said belt are attached. Said brake mechanism consists of a control lever as well as of a tensioning assembly, which is in the central area via a bush attached to said control lever. Said brake belt is by means of its first end portion attached to said control lever, and by means of its second terminal portion to said tensioning assembly of the mechanism. Said control lever is by its first end portion pivotally embedded in a fixed pivot point, and is on its other end portion furnished with a control arm, which is serving for pivoting said lever around said pivot point. At the same said terminal portion of the brake belt is eccentrically with respect to said pivot point attached in the area between said pivot point and said bush. Moreover, said tensioning assembly comprises a bolt, which extends throughout said bush, so that on the one end portion of said bolt the brake belt is attached by means of a coupling, while between said coupling and said bush a compression spring is placed on said bolt, which is intended for returning of the mechanism back to its initial position, as soon as the brake has been deactivated. On the opposite end portion of said bolt there is another compression spring, which is inserted between said bush and a nit, and which is intended for maintaining of a pre-set tension of the belt by deactivated brake, which is adjusted in dependency on each position of said nut.

In this, at least of said springs is a helical compression spring, and said control arm of the control lever is preferably adapted to cooperate with a suitable actuating means, preferably a hydraulic cylinder. Such brake enables braking with such intensity, which allows retaining of a towing cable by winding thereof onto the winding drum. However, each braking by towing a load is performed suddenly and stressful, which is less comfortable both in view of manipulating with each load as well as in view of generating mechanical stresses, to which certain components of the forestry winch are then exposed, and of course also the load itself.

The present invention refers to a forestry winch belt brake with regulating mechanism. Such brake comprises a brake disc, which is capable to rotate around its rotation axis and is furnished with a smooth cylindrical circumferential surface, which is optionally available as an integral part of a winding drum for coiling of a towing cable in a forestry winch. Such brake moreover comprises a flexible, resilient and correspondingly tension-resistant braking belt, which is placed around said circumferential surface of the brake disc, and the terminal portions of said belt are connected with each other by means of a brake mechanism and thereby form a loop. Said brake mechanism comprises an appropriately rigid lever, which is in the area of its first arm pivotally attached in a pivot point, and is in the area of its second arm pivotally connected with a primary actuator, which is optionally a hydraulic cylinder or similar means for generating each desired force in each desired direction. Said brake mechanism further comprises a regulating assembly, the length of which is adjustable for the purposes of adjusting each required tension of said braking belt, and said regulating mechanism is pivotally connected with said lever in the central area thereof, namely between said arms. The first terminal portion of the braking belt is attached to said lever of the brake mechanism in the area of said first arm thereof, and the second terminal portion of said braking belt is connected with said regulating assembly, so that each required tension of the braking band is adjustable by means of adjusting the length of the regulating assembly, while by pivoting said lever around its pivot point in one or another direction said braking belt is either pressed towards the circumferential surface of the brake disc or released.

The invention provides that said brake mechanism comprises, in addition to said primary actuator, which is pivotally connected to said second arm of the lever, also a secondary actuator, which is together with said regulating assembly for adjusting each tension of the braking belt pivotally connected with said lever in the central area thereof, namely between its first arm, on which a pivot point is arranged, adjacent to which the first terminal portion of the braking belt is attached to the lever, and its second arm, to which said secondary actuator is pivotally attached, so that said lever is pivotal around its pivot point both by means of the primary actuator and also by means of the secondary actuator.

On one of possible embodiments of the invention said secondary actuator is a hydraulic cylinder. In such case said regulating assembly comprises on the one hand a threaded bolt, on which a nut is screwed, which is supported by a spring and is intended for adjusting of each tension of the braking belt, and on the other hand also said secondary actuator, through which said threaded bolt extends, so that on the terminal portion of said secondary actuator, which protrudes out from it, a coupling for connecting the second terminal portion of the braking belt is arranged, wherein the distance between said secondary actuator and said coupling may be varied and is adjustable in advance.

The invention will be disclosed on the basis of an embodiment, which is presented in the attached drawings, wherein
- Fig. 1: is a front view of a belt brake with inactivated secondary actuator; and
- Fig. 2: is also a front view of a belt brake, however with activated secondary actuator.

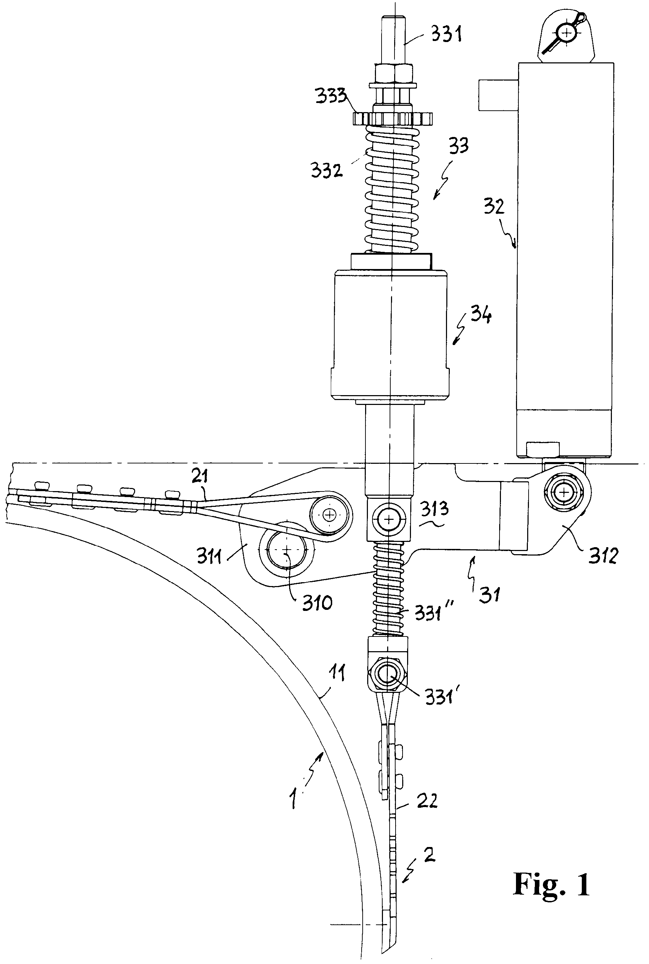

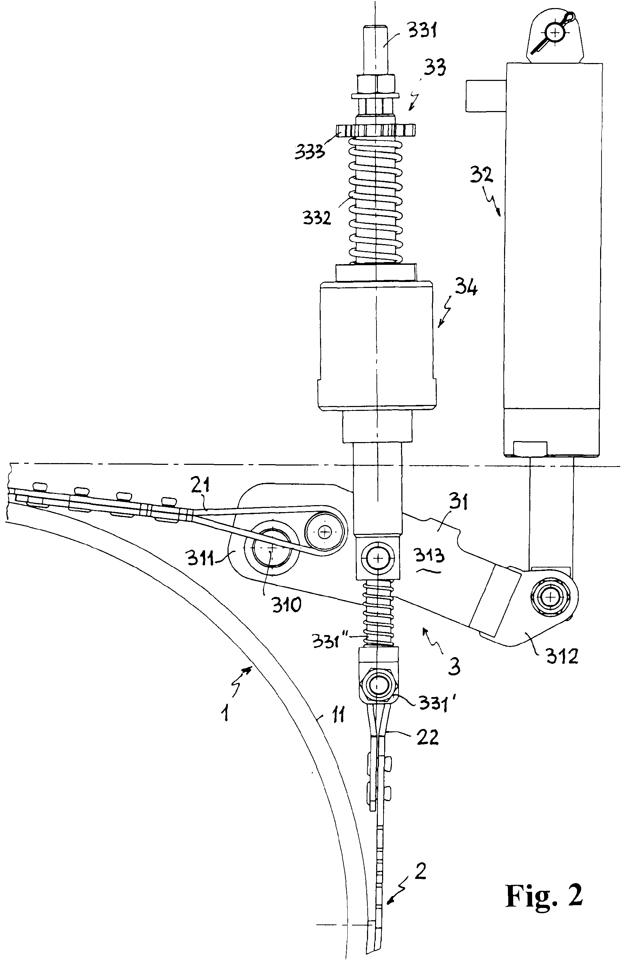

A forestry winch belt brake with regulating mechanism according to Figs. 1 and 2 comprises a brake disc 1, which is capable to rotate around its rotation axis and is furnished with a smooth cylindrical circumferential surface 11. Said disc 1 may, in particular when the brake is used in a forestry winch, optionally be available as an integral part of a winding drum for coiling of a towing cable in said winch.

Said brake further comprises a flexible, resilient and correspondingly tension-resistant braking belt, which is placed around said circumferential surface 11 of the brake disc 1, both terminal portions 21, 22 are connected with each other by means of a brake mechanism 3 and thereby form a loop.

Said brake mechanism comprises an appropriately rigid lever 31, which is in the area of its first arm 311 pivotally attached in a pivot point 310, and is in the area of its second arm 312 pivotally connected with a primary actuator 32, which is in the shown embodiment available as a hydraulic cylinder or similar means for generating of a desired force, which is acting in appropriate direction.

Said brake mechanism 3 further comprises a regulating assembly 33, the length of which is adjustable for the purposes of adjusting each required tension of said braking belt 2, and said regulating mechanism 33 is pivotally connected with said lever 31 in the central area 313 thereof, namely in the area between both arms 311, 312 of said lever 31.

The first terminal portion 21 of the braking belt 2 is attached to said lever 31 of the brake mechanism 3 in the area of said first arm 311 thereof, while the second terminal portion 22 of said braking belt 2 is connected with said regulating assembly 33. Consequently, each required tension of the braking band 2 is adjustable by means of adjusting the length of the regulating assembly 33, while by pivoting said lever 31 around its pivot point 310 in one or another direction said braking belt 2 is either pressed towards the circumferential surface 11 of the brake disc 1, or also released, when required.

Said brake mechanism 3 comprises, in addition to said primary actuator 32, which is pivotally connected to said second arm 312 of the lever 31, also a secondary actuator 34, which is together with said regulating assembly 33 for adjusting each tension of the braking belt 2 pivotally connected with said lever 31 in the central area 313 thereof, namely between its first arm 311, on which a pivot point 310 is arranged, adjacent to which the first terminal portion 21 of the braking belt 2 is attached to the lever 31, and its second arm 312, to which said secondary actuator 34 is pivotally attached, so that said lever 31 is pivotal around its pivot point 310 both by means of the primary actuator 32 and also by means of the secondary actuator 34.

In particular, when such brake is used in a hydraulically powered forestry winch, said secondary actuator is preferably a hydraulic cylinder.

In a preferred embodiment of the invention said regulating assembly 33 comprises on the one hand a threaded bolt 331, on which a nut 333 is screwed, which is supported by a spring 332 and is intended for adjusting of each tension of the braking belt 2, and on the other hand also said secondary actuator 34, through which said threaded bolt 331 extends, on the outside of said actuator 34 protruding terminal portion 331" thereof a coupling 331' for connecting the second terminal portion 22 of the braking belt 2 is arranged, wherein the distance between said secondary actuator 34 and said coupling 331' may be varied and is adjustable in advance.

Regarding the embodiment of the brake according to the invention, which is shown in Figs. 1 and 2, activation of the brake is performed by pivoting the lever 32 in a counter clockwise direction, which is possible regardless to activated or deactivated status of the secondary actuator 34. When said secondary actuator 34 is in activated, as shown in Fig. 1, braking is performed in a substantially the same manner as in commonly known state of the art brakes, which means suddenly and stressfully. By activation of said secondary actuator 34, as shown in Fig. 2, the position of coupling 331' of the braking belt 2 on the brake mechanism 3 and herewith also the geometry of the brake mechanism 3 relative to the braking belt 2 is changed, so that braking in such amended circumstances may be performed gradually and smoothly.

## Claims

1. Forestry winch belt brake with regulating mechanism, comprising a brake disc (1), which is capable to rotate around its rotation axis and is furnished with a smooth cylindrical circumferential surface (11), which is optionally available as an integral part of a winding drum for coiling of a towing cable in a forestry winch, as well as a flexible, resilient and correspondingly tension-resistant braking belt (2), which is placed around said circumferential surface (11) of the brake disc (1), while its terminal portions (21, 22) are connected with each other by means of a brake mechanism (3) and thereby form a loop, wherein said brake mechanism (3) comprises an appropriately rigid lever (31), which is in the area of its first arm (311) pivotally attached in a pivot point (310), and is in the area of its second arm (312) pivotally connected with a primary actuator (32), which is optionally a hydraulic cylinder or similar means for generating each desired force in each desired direction, wherein said brake mechanism (3) further comprises a regulating assembly (33), the length of which is adjustable for the purposes of adjusting each required tension of said braking belt (2), and said regulating mechanism (33) is pivotally connected with said lever (31) in the central area (313) thereof, namely between said arms (311, 312), so that the first terminal portion (21) of the braking belt (2) is attached to said lever (31) of the brake mechanism (3) in the area of said first arm (311) thereof, and the second terminal portion (22) of said braking belt (2) is connected with said regulating assembly (33), so that each required tension of the braking band (2) is adjustable by means of adjusting the length of the regulating assembly (33), while by pivoting said lever (31) around its pivot point (310) in one or another direction said braking belt (2) is either pressed towards the circumferential surface (11) of the brake disc (1) or released, **characterized in that** said brake mechanism (3) comprises, in addition to said primary actuator (32), which is pivotally connected to said second arm (312) of the lever (31), also a secondary actuator (34), which is together with said regulating assembly (33) for adjusting each tension of the braking belt (2) pivotally connected with said lever (31) in the central area (313) thereof, namely between its first arm (311), on which a pivot point (310) is arranged, adjacent to which the first terminal portion (21) of the braking belt (2) is attached to the lever (31), and its second arm (312), to which said secondary actuator (34) is pivotally attached, so that said lever (31) is pivotal around its pivot point (310) both by means of the primary actuator (32) and also by means of the secondary actuator (34).

2. Belt brake according to Claim 1, **characterized in that** said secondary actuator (34) is a hydraulic cylinder.

3. Belt brake according to Claim 1 or 2, **characterized in that** said regulating assembly (33) comprises on the one hand a threaded bolt (331), on which a nut (333) is screwed, which is supported by a spring (332) and is intended for adjusting of each tension of the braking belt (2), and on the other hand also said secondary actuator (34), through which said threaded bolt (331) extends, on the outside of said actuator (34) protruding terminal portion (331") thereof a coupling (331') for connecting the second terminal portion (22) of the braking belt (2) is arranged, wherein the distance between said secondary actuator (34) and said coupling (331') may be varied and is adjustable in advance.

## Patentansprüche

1. Windengurtbremse für Forstwirtschaft mit Regulierungsmechanismus, umfassend eine Bremsscheibe (1), die in der Lage ist, sich um ihre Drehachse zu drehen, und die mit einer glatten zylindrischen Umfangsfläche (11) ausgestattet ist, die gegebenenfalls als integraler Bestandteil einer Fördertrommel zum Aufrollen eines Ziehkabels in einer Forstseilwinde erhältlich ist, sowie einen flexiblen, nachgiebigen und entsprechend spannungsfesten Bremsgurt (2), der um die Umfangsfläche (11) der Bremsscheibe (1) gelegt ist, während seine Endabschnitte (21, 22) mittels eines Bremsmechanismus (3) miteinander verbunden sind und dadurch eine Schlaufe bilden, wobei der Bremsmechanismus (3) einen in geeigneter Weise starren Hebel (31) umfasst, der im Bereich seines ersten Arms (311) schwenkbar in einem Schwenkpunkt (310) angebracht ist und im Bereich seines zweiten Arms (312) schwenkbar mit einem primären Aktuator (32) verbunden ist, der gegebenenfalls ein Hydrozylinder oder ein ähnliches Mittel zum Erzeugen jeder gewünschten Kraft in jeder gewünschten Richtung ist, wobei der Bremsmechanismus (3) ferner eine Regulierungsanordnung (33) umfasst, deren Länge für den Zweck des Einstellens jeder erforderlichen Spannung des Bremsgurts (2) einstellbar ist, und der Regulierungsmechanismus (33) mit dem Hebel (31) in seinem mittleren Bereich (313), nämlich zwischen den Armen (311, 312), schwenkbar verbunden ist, so dass der erste Endabschnitt (21) des Bremsgurts (2) an dem Hebel (31) des Bremsmechanismus (3) im Bereich seines ersten Arms (311) angebracht ist und der zweite Endabschnitt (22) des Bremsgurts (2) mit der Regulierungsanordnung (33) verbunden ist, so dass jede erforderliche Spannung des Bremsbands (2) mittels des Einstellens der Länge der Regulierungsanordnung (33) einstellbar ist, während durch Verschwenken des Hebels (31) um seinen Schwenkpunkt (310) in die eine oder eine andere Richtung der Bremsgurt (2) entweder zur Umfangsfläche (11) der Bremsscheibe (1) hin gedrückt oder gelöst wird, **dadurch gekennzeichnet, dass** der Bremsmechanismus (3), zusätzlich zu dem primären Aktuator (32), der mit dem zweiten Arm (312) des Hebels (31) schwenkbar verbunden ist, auch einen sekundären Aktuator (34) umfasst, der zusammen mit der Regulierungsanordnung (33) zum Einstellen jeder Spannung des Bremsgurts (2) mit dem Hebel (31) in seinem mittleren Bereich (313) schwenkbar verbunden ist, nämlich zwischen seinem ersten Arm (311), auf dem ein Schwenkpunkt (310) angeordnet ist, angrenzend an den der erste Endabschnitt (21) des Bremsgurts (2) an dem Hebel (31) angebracht ist, und seinem zweiten Arm (312), an dem der sekundäre Aktuator (34) schwenkbar angebracht ist, so dass der Hebel (31) sowohl mittels des primären Aktuators (32) als auch mittels des sekundären Aktuators (34) um seinen Schwenkpunkt (310) schwenkbar ist.

2. Gurtbremse nach Anspruch 1, **dadurch gekennzeichnet, dass** der sekundäre Aktuator (34) ein Hydrozylinder ist.

3. Gurtbremse nach Anspruch 1 oder 2, **dadurch gekennzeichnet, dass** die Regulierungsanordnung (33) einerseits einen Gewindebolzen (331), auf den eine Mutter (333) geschraubt ist, die von einer Feder (332) gehalten und zum Einstellen jeder Spannung des Bremsgurts (2) gedacht ist, und andererseits auch den sekundären Aktuator (34) umfasst, durch den sich der Gewindebolzen (331) erstreckt, wobei auf der Außenseite des Aktuators (34) am vorstehenden Endabschnitt (331") von diesem eine Kupplung (331') zum Verbinden des zweiten Endabschnitts (22) des Bremsgurts (2) angeordnet ist, wobei der Abstand zwischen dem sekundären Aktuator (34) und der Kupplung (331') variiert werden kann und im Voraus einstellbar ist.

## Revendications

1. Frein à courroie de treuil forestier avec mécanisme de régulation, comprenant un disque de frein (1), qui est capable de tourner autour de son axe de rotation et est pourvu d'une surface circonférentielle cylindrique lisse (11), qui est éventuellement disponible en tant que partie intégrante d'un tambour d'enroulement pour enrouler un câble de remorquage dans un treuil forestier, ainsi qu'une courroie de freinage (2) souple, élastique et par conséquent résistante à la tension, qui est placée autour de ladite surface circonférentielle (11) du disque de frein (1), tandis que ses parties terminales (21, 22) sont reliées l'une à l'autre au moyen d'un mécanisme de frein (3) et forment ainsi une boucle, dans lequel ledit mécanisme de frein (3) comprend un levier rigide (31) de manière appropriée, qui se trouve dans la zone de son premier bras (311) fixé en pivotement dans un point de pivotement (310) et se trouve dans la zone de son deuxième bras (312) relié en pivotement à un actionneur primaire (32), qui est éventuellement un vérin hydraulique ou un moyen similaire pour générer chaque force souhaitée dans chaque direction souhaitée, dans lequel ledit mécanisme de frein (3) comprend en outre un ensemble de régulation (33), dont la longueur est réglable dans le but de régler chaque tension requise de ladite courroie de freinage (2), et ledit mécanisme de régulation (33) est relié en pivotement audit levier (31) dans la zone centrale (313) de celui-ci, à savoir entre lesdits bras (311, 312), de sorte que la première partie terminale (21) de la courroie de freinage (2) soit fixée audit levier (31) du mécanisme de frein (3) dans la zone dudit premier bras (311) de celui-ci, et que la deuxième partie terminale (22) de ladite courroie de freinage (2) soit reliée audit ensemble de régulation (33), de sorte que chaque tension requise de la bande de freinage (2) soit réglable au moyen du réglage de la longueur de l'ensemble de régulation (33), tout en faisant pivoter ledit levier (31) autour de son point de pivotement (310) dans une direction ou dans l'autre, ladite courroie de freinage (2) est soit poussée vers le surface circonférentielle (11) du disque de frein (1) soit libérée, **caractérisé en ce que** ledit mécanisme de frein (3) comprend, en plus dudit actionneur primaire (32), qui est relié en pivotement audit deuxième bras (312) du levier (31), également un actionneur secondaire (34) qui fonctionne conjointement avec ledit ensemble de régulation (33) pour régler chaque tension de la courroie de freinage (2) reliée en pivotement audit levier (31) dans la zone centrale (313) de celui-ci, à savoir entre son premier bras (311), sur lequel un point de pivotement (310) est agencé, à côté duquel la première partie terminale (21) de la courroie de freinage (2) est fixée au levier (31), et son deuxième bras (312), auquel ledit actionneur secondaire (34) est fixé en pivotement, de sorte que ledit levier (31) pivote autour de son point de pivotement (310) à la fois au moyen de l'actionneur primaire (32) et également au moyen de l'actionneur secondaire (34).

2. Frein à courroie selon la revendication 1, **caractérisé en ce que** ledit actionneur secondaire (34) est un vérin hydraulique.

3. Frein à courroie selon la revendication 1 ou 2, **caractérisé en ce que** ledit ensemble de régulation (33) comprend d'une part un boulon fileté (331), sur lequel est vissé un écrou (333), qui est supporté par un ressort (332) et est destiné au réglage de chaque tension de la courroie de freinage (2), et d'autre part également ledit actionneur secondaire (34), à travers lequel s'étend ledit boulon fileté (331), sur l'extérieur de la partie terminale en saillie (331") dudit actionneur (34) de celui-ci, un accouplement (331') pour relier la deuxième partie terminale (22) de la courroie de freinage (2) est agencé, dans lequel la distance entre ledit actionneur secondaire (34) et ledit accouplement (331') peut varier et est réglable à l'avance.
